# EUROPÄISCHE PATENTSCHRIFT

(11) **EP 1 664 698 B1**
(45) Veröffentlichungstag und Bekanntmachung des Hinweises auf die Patenterteilung: **21.05.2008**
(21) Anmeldenummer: 04803274.2
(22) Anmeldetag: 25.11.2004
(51) Int. Cl.: G01K 7/16, H01C 17/28

(54) **BAUELEMENT UND VERFAHREN ZU DESSEN HERSTELLUNG**
COMPONENT AND METHOD FOR THE PRODUCTION THEREOF
COMPOSANT ET SON PROCEDE DE PRODUCTION

(30) Priorität: 28.11.2003 DE 10356367
(43) Veröffentlichungstag der Anmeldung: 07.06.2006
(73) Patentinhaber: Zitzmann, Heinrich, 91207 Lauf an der Pegnitz (DE); Bernitz, Georg, 90441 Nürnberg (DE)
(72) Erfinder: BERNITZ, Georg, 90441 Nürnberg (DE); ZITZMANN, Heinrich, 91207 Lauf an der Pegnitz (DE)
(74) Vertreter: Stöckeler, Ferdinand
(86) Internationale Anmeldenummer: PCT/EP2004/013384
(87) Internationale Veröffentlichungsnummer: WO 2005/052527

(56) Entgegenhaltungen:
- WO-A-01/84562
- US-A- 5 425 647
- US-A- 5 534 843
- US-A1- 2002 050 921
- US-B1- 6 248 978

## Beschreibung

Die vorliegende Erfindung bezieht sich auf ein Bauelement und auf ein Verfahren zu dessen Herstellung, und hier insbesondere auf ein Bauelement, welches ein abmessungsmäßig sehr kleines Bauteil mit Anschlussbereichen aufweist, das aufgrund der Einbettung in das Bauelement gut handzuhaben und zu kontaktieren ist.

Im Stand der Technik geht die Tendenz dazu, Bauteile und elektrische Schaltungen immer weiter zu verkleinern bzw. zu miniaturisieren, so dass beispielsweise auf einem einzigen Wafer oder Substrat eine Vielzahl von Bauteilen in hoher Dichte hergestellt werden, die anschließend zur Weiterverwendung vereinzelt werden.

Der Vorteil dieser Miniaturisierung besteht darin, dass zum einen der durch die Bauteile eingenommene Platz in anderen Komponenten reduziert werden kann, und, was ebenfalls sehr wesentlich ist, eine Vielzahl von solchen Bauteilen in einem einzelnen Substrat herstellbar sind, so dass die zur Herstellung erforderlichen Ressourcen immer optimaler ausgenutzt werden. Aus einem Substrat erhält man nunmehr eine Vielzahl von Bauteilen, so dass durch Einsatz der gleichen Menge an Material eine erhöhte Ausbeute erhalten werden kann, so dass die Gesamtkosten für jedes einzelne Bauteil sich reduzieren, im Hinblick auf das verwendete Substratmaterial entsprechend dem durch das Bauelement eingenommenen Platz.

Abhängig von dem Einsatzgebiet und insbesondere von der Anzahl der verwendeten Bauteile werden diese nach deren Vereinzelung beispielsweise in Gurten angeordnet und einer automatischen Bestückungsanlage zugeführt, die dann die Bauteile an entsprechenden Orten einer gedruckten Schaltungsplatine oder einer anderen Schaltung platziert und kontaktiert.

Die Größe der Bauteile stellt aufgrund der automatischen Verarbeitung und der gewählten Befestigungstechnologie im Regelfall kein Problem dar. Anders stellt sich die Situation dar, wenn die verwendeten Bauelemente in einer Stückzahl verwendet werden, die keine gegurtete Anordnung der Bauteile ermöglicht und ferner auch keine automatische Bestückung.

Beispielhaft seien hier Temperatursensoren betrachtet, die im Regelfall einzeln platziert werden und ferner mit einem Anschlussdraht kontaktiert werden. Aufgrund der vielen verschiedenen Einsatzorte solcher Sensorbauelemente ist eine automatisierte Bestückung im Regelfall nicht sinnvoll.

Die oben beschriebenen Vorteile im Hinblick auf Materialausbeute und ähnliches, die durch die weitergehende Miniaturisierung erhalten werden, führen jedoch im Zusammenhang mit der Handhabung einzelner Temperatursensoren im Gegenzug zu ganz neuen Problemen, insbesondere im Hinblick auf die Handhabbarkeit solcher Bauteile und die Kontaktierbarkeit solcher Bauteile.

Genauer gesagt liegt es auf der Hand, dass Bauteile, die solch kleine Abmessungen aufweisen, nur schwer handzuhaben sind, da diese nur schwer zu Greifen und zu Plazieren sind. Folglich besteht eine nicht unerhebliche Gefahr, dass Bauteile verloren gehen, verrutschen oder auf andere Art und Weise nicht ordnungsgemäß platziert werden können. Ein weiteres Problem tritt auf, wenn die Bauteile nicht aufgelötet werden, sondern beispielsweise mit einem Anschlussdraht zu kontaktieren sind. Für eine solche Kontaktart ist es erforderlich, eine ausreichende Kontaktfläche bereitzustellen, um so den Anschlussdraht sicher an einem Anschlussbereich des Bauteils anlöten zu können. Es liegt auf der Hand, dass mit immer kleiner werdenden Bauelementabmessungen auch die verfügbaren Flächen zur Anbringung eines Anschlussdrahts immer geringer werden, so dass hier, konsequenterweise, eine Reduzierung der Anhaftungskräfte resultiert, was im Endeffekt zu einer reduzierten Anschlusszuverlässigkeit führt.

Die WO 01/84562 A1 zeigt einen Temperaturmessfühler bestehend aus einem Substrat, einer Wiederstandsschicht, einer Oxidschicht und einer Schutzschicht. Ein solcher Temperaturmessfühler wird hergestellt, indem die strukturierte Wiederstandsschicht auf einer Oberfläche des Substrats gebildet wird, die gebildete Wiederstandsschicht oxidiert wird, und anschließend die Schutzschicht auf zumindest einem Teil der Wiederstandsschicht aufgebracht werden.

Die US A-5,534,843 beschreibt einen Termistor, dessen Oberflächen, mit Ausnahme der zwei Endoberflächen, mit einem isolierenden Glas bedeckt sind. Der Termistor wird aus einem Keramiksubstrat .gewonnen, dessen gegenüberliegende Hauptoberflächen mit einer isolierenden Glasschicht bedeckt sind, wobei das Substrat zunächst in Streifen geschnitten wird, weiterbehandelt wird, und anschließend die Bauteile vereinzelt werden.

Die US 6,248,978 B1 zeigt einen Heizer, der ein Substrat aufweist, welches eine hohe Wärmeleitfähigkeit hat. Eine Wiederstandsschicht auf dem Substrat ist vorgesehen, zusammen mit einem Temperaturerfassungselement.

Die US 5,425,647 A zeigt eine SMD-Komponente, die auf einer Schaltungsplatine unter Verwendung von zwei beabstandeten, leitfähigen Anschlussflächen montiert ist.

Die US 2002/0050921 A1 beschreibt eine SMD-Komponente, beispielsweise einen Temperatursensor, die mit elektrisch leitfähigen Kontaktleiterbahnen auf einem Substrat verbunden sind.

Ausgehend von diesem Stand der Technik hat sich die vorliegende Erfindung die Aufgabe gesetzt, ein verbessertes Verfahren zum Herstellen eines Bauelements und ein verbessertes Bauelement zu schaffen, die es ermöglichen ein Bauteil trotz dessen geringer Abmessung sicher und zuverlässig zu handhaben und zu kontaktieren.

Diese Aufgabe wird durch ein Verfahren nach Anspruch 1 und durch ein Bauelement nach Anspruch 10 gelöst.

Die vorliegende Erfindung schafft ein Verfahren zum Herstellen eines Bauelements, mit folgenden Schritten:
Bereitstellen zumindest eines Bauteils, das zumindest einen ersten Anschlussbereich aufweist;
Bereitstellen eines Trägers mit einer ersten Oberfläche, in der zumindest eine Ausnehmung gebildet ist;
Einbringen des bereitgestellten Bauteils in die Ausnehmung, derart, dass der erste Anschlussbereich des Bauteils der ersten Oberfläche des Trägers zugewandt ist; und
Aufbringen eines leitfähigen Materials auf die erste Oberfläche des Trägers, derart, dass das leitfähige Material mit dem ersten Anschlussbereich des Bauteils in Kontakt ist.

Gemäß einem bevorzugten Ausführungsbeispiel umfasst das Bauteil einen ersten Anschlussbereich und einen zweiten Anschlussbereich, und die Ausnehmung in dem Träger erstreckt sich durch denselben hindurch, also von der ersten Oberfläche des Trägers zu einer zweiten Oberfläche des Trägers, die der ersten Oberfläche gegenüberliegt. Bei diesem Ausführungsbeispiel wird das Bauteil dann in die Ausnehmung eingebracht, so dass der erste Anschlussbereich der ersten Oberfläche zugewandt ist und der zweite Anschlussbereich der zweiten Oberfläche zugewandt ist. Zusätzlich wird nun auch auf der zweiten Oberfläche des Trägers ein leitfähiges Material so aufgebracht, dass dieses mit dem zweiten Anschlussbereich des Bauteils in Kontakt ist.

Gemäß einem weiteren bevorzugten Ausführungsbeispiel der vorliegenden Erfindung umfasst der Träger eine Mehrzahl von Ausnehmungen, die beabstandet voneinander angeordnet sind und in die jeweils ein Bauteil eingebracht ist, wobei nach dem Aufbringen der einen leitfähigen Schicht oder der zwei leitfähigen Schichten auf den gegenüberliegenden Oberflächen eine Mehrzahl von Bauelementen aus dem so prozessierten Träger erzeugt wird, derart, dass eine Abmessung jedes Bauelements größer ist als das eingebrachte Bauteil und ein Anschlussbereich des Bauelements größer ist als der Anschlussbereich des Bauteils. Vorzugsweise umfasst das Erzeugen der Mehrzahl von Bauelementen ein Zerlegen des Trägers, beispielsweise durch Zersägen des Trägers oder ein Ausstanzen der Bauelemente aus dem Träger.

Gemäß einem weiteren bevorzugten Ausführungsbeispiel wird das leitfähige Material, welches die Anschlussbereiche des Bauteils kontaktiert, nach dem Aufbringen eingebrannt.

Die Ausnehmung in dem Träger, der beispielsweise ein Keramikmaterial umfasst, kann durch Stanzen oder Lasern erfolgen. Das leitfähige Material umfasst vorzugsweise Platin, Gold und/oder Nickel. Ferner umfasst das bereitgestellte Bauteil vorzugsweise einen Temperatursensor. Vorzugsweise wird für den Träger ein Material verwendet, dessen Ausdehnungskoeffizient nahezu gleich oder gleich dem Ausdehnungskoeffizient des Material für das Bauteil ist.

Die vorliegende Erfindung schafft ferner ein Bauelement mit
einem Träger mit einer ersten Oberfläche, in der eine Ausnehmung angeordnet ist;
einem Bauteil mit einem ersten Anschlussbereich, das in der Ausnehmung derart angeordnet ist, dass der erste Anschlussbereich der ersten Oberfläche zugewandt ist; und
einer leitfähigen Schicht auf der ersten Oberfläche des Trägers, die mit dem ersten Anschlussbereich des Bauteils in Kontakt ist.

Gemäß einem weiteren Ausführungsbeispiel umfasst das Bauteil einen zweiten Anschlussbereich, und die Ausnehmung erstreckt sich durch den Träger von dessen erster Oberfläche zu dessen zweiter Oberfläche, die der ersten Oberfläche gegenüberliegt. Eine weitere leitfähige Schicht ist auf der zweiten Oberfläche des Trägers aufgebracht und kontaktiert den zweiten Anschlussbereich des Bauteils.

Bevorzugte Weiterbildungen der vorliegenden Erfindung sind in den Unteransprüchen definiert.

Nachfolgend werden anhand der beiliegenden Zeichnungen bevorzugte Ausführungsbeispiele der vorliegenden Erfindung näher erläutert. Es zeigen:
- Fig. 1 bis Fig. 5: Darstellungen, die ein bevorzugtes Ausführungsbeispiel des erfindungsgemäßen Verfahrens zur Herstellung der Bauelemente erläutern; und
- Fig. 6: eine Querschnittdarstellung des erfindungsgemäßen Bauelements gemäß einem bevorzugten Ausführungsbeispiel.

Hinsichtlich der nachfolgenden Beschreibung der bevorzugten Ausführungsbeispiele wird darauf hingewiesen, dass in den beiliegenden Zeichnungen gleiche oder gleichwirkende Elemente mit gleichen Bezugszeichen versehen sind.

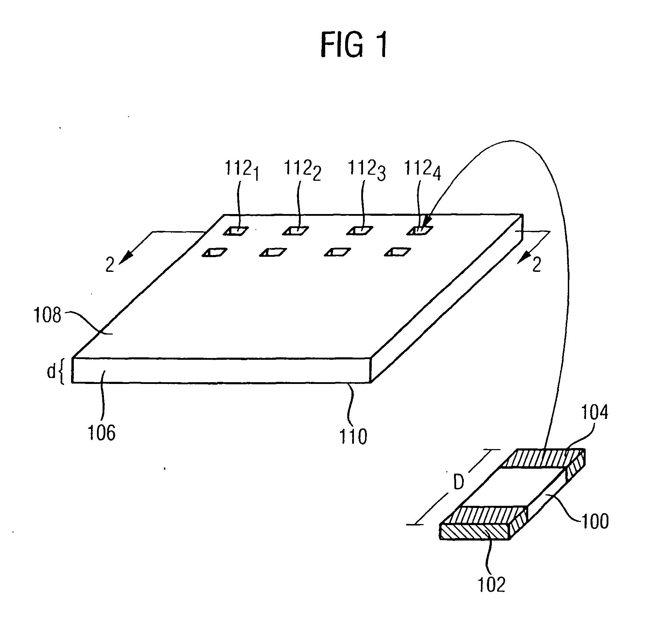

Anhand der Fig. 1 bis Fig. 5 wird nun ein bevorzugtes Ausführungsbeispiel des erfindungsgemäßen Herstellungsverfahrens anhand von Temperatursensoren näher erläutert.

In Fig. 1 ist ein SMD-Temperatursensor 100 gezeigt, der einen ersten Anschlussbereich 102 und einen zweiten Anschlussbereich 104 aufweist. Der gezeigte SMD-Temperatursensor hat eine Längsabmessung D, wie dies in Fig. 1 gezeigt ist. Obwohl das bevorzugte Ausführungsbeispiel anhand von SMD-Temperatursensoren beschrieben wird, ist festzuhalten, dass die vorliegende Erfindung nicht hierauf beschränkt ist, sondern vielmehr Anwendung bei beliebigen Bauteilen findet, die zumindest einen Anschlussbereich aufweisen.

In einem ersten Schritt werden eine Mehrzahl von SMD-Temperatursensoren 100 bereitgestellt, die beispielsweise auf herkömmliche Art und Weise hergestellt wurden. Das SMD-Bauelement 100 ist beispielsweise ein Chip-Bauelement, das auf herkömmliche Art und Weise hergestellt wird.

Ferner wird ein Träger 106, beispielsweise aus einem Keramikmaterial, bereitgestellt. Der Träger 106 hat eine erste Oberfläche 108 und eine zweite Oberfläche 110, die der ersten Oberfläche 108 gegenüberliegt. In der Oberfläche 108 des Trägers 106 sind bei dem in Fig. 1 dargestellten Ausführungsbeispiel einer Mehrzahl von Ausnehmungen 112₁ bis 112₄ gebildet. Bei dem gezeigten Ausführungsbeispiel erstrecken sich die Ausnehmungen 112₁ bis 112₄ durch die gesamte Dicke d des Trägers 106, also von der ersten Oberfläche 108 zu dessen zweiter Oberfläche 110. Wie durch den Pfeil 114 in Fig. 1 angedeutet ist, wird in einem weiteren Verfahrensschritt in jede der Ausnehmungen 112₁ bis 112₄ ein SMD-Temperatursensor 100 eingebracht. Die Dicke d des Trägers 106 entspricht im wesentlichen der Dicke D des SMD-Temperatursensors 100. Die SMD-Temperatursensoren werden so in die Ausnehmungen eingebracht, dass der erste Anschlussbereich 102 eines SMD-Temperatursensors 100 einer Öffnung der Ausnehmung in der ersten Oberfläche 108 des Träger 106 zugewandt ist, und dass der zweite Anschlussbereich 102 eines SMD-Temperatursensors 100 einer Öffnung der Ausnehmung in der zweiten Oberfläche 110 des Träger 106 zugewandt ist. Mit anderen Worten werden die SMD-Temperatursensoren in den horizontal ruhenden Träger in einer im wesentlichen vertikalen Ausrichtung eingebracht. Die Ausnehmungen 112₁ bis 112₄ sind durch geeignete Maßnahmen in den Keramikträger 106 eingebracht, beispielsweise durch Stanzen oder Lasern.

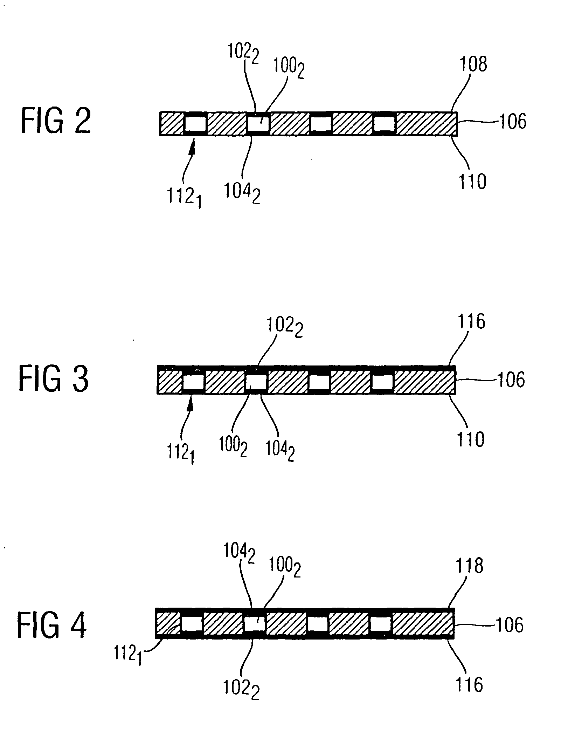

Fig. 2 zeigt eine Querschnittdarstellung des Keramikträgers 106 mit in die Ausnehmungen 112₁ bis 112₄ eingebrachte SMD-Temperatursensoren 100. Der Einfachheit halber und um die Übersichtlichkeit der Darstellung in Fig. 2 zu wahren, ist dort lediglich beispielhaft das in der Ausnehmung 112₂ angeordnete SMD-Bauelement mit den entsprechenden Bezugszeichen 100₂, 102₂ und 104₂ gekennzeichnet.

In einem nachfolgenden Verfahrensschritt wird auf die erste Oberfläche 108 des Trägers 106 eine leitfähige Schicht 116, beispielsweise aus Platin, Gold und/oder Nickel aufgebracht, wie dies in Fig. 3 zu sehen ist. Wie ferner zu erkennen ist, wird die leitfähige Schicht 116 derart aufgebracht, dass diese in Kontakt mit den ersten Anschlussbereichen 102 der in den Ausnehmungen 112 angeordneten Temperatursensoren 100 ist. Anschließend erfolgt, vorzugsweise, ein Einbrennen des aufgebrachten Materials 116.

Nachfolgend wird die in Fig. 3 gezeigte Anordnung gedreht, und auf die nunmehr nach oben gerichtete zweite Oberfläche 110 des Trägers 106 wird eine weitere leitfähige Schicht 118 aufgebracht, derart, dass diese die zweiten Anschlussbereiche 104 der in den Ausnehmungen 112 angeordneten SMD-Temperatursensoren 100 kontaktiert, wie dies in Fig. 4 gezeigt ist. Anschließend kann, wiederum optional, ein Einbrennen der aufgebrachten Schicht 118 erfolgen.

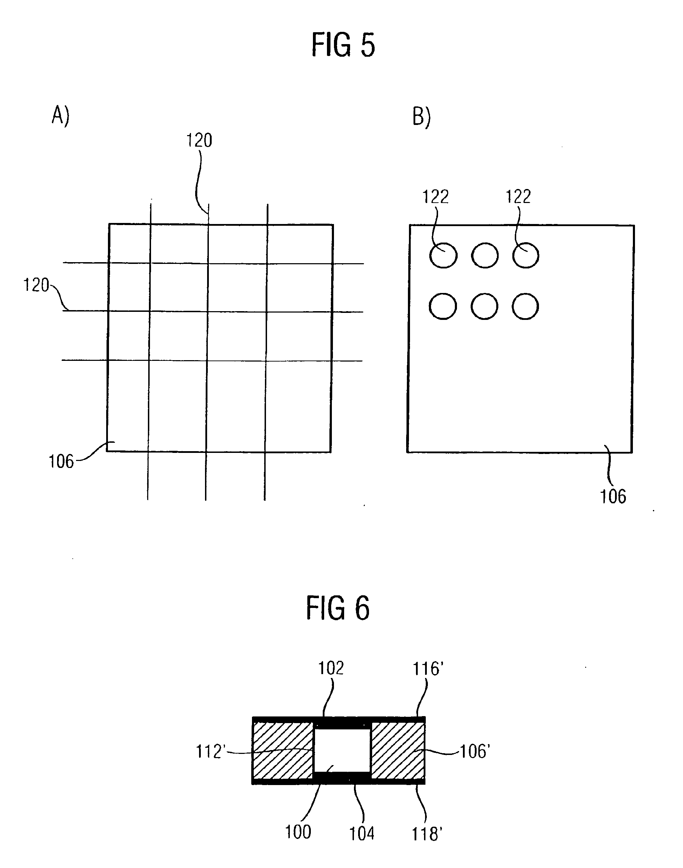

Um die einzelnen Bauelemente zu erhalten, wird die in Fig. 4 gezeigte Anordnung nachfolgend zerlegt, indem entweder das Substrat 106 entlang vorbestimmter Sägelinien 120, wie sie in Fig. 5A gezeigt sind, zersägt wird oder indem, wie es in Fig. 5B gezeigt wird, Bereiche des Trägers 106 mit den darin angeordneten Bauteilen ausgestanzt werden, wie dies in Fig. 5B bei 122 dargestellt ist. Zusätzlich können auch noch andere, bekannte Verfahren zur Vereinzelung der Bauelemente durchgeführt werden.

Fig. 6 zeigt ein sich nach der Vereinzelung ergebendes Bauelement gemäß der vorliegenden Erfindung nach einem bevorzugten Ausführungsbeispiel. Wie zu erkennen ist, umfasst das Bauelement einen Abschnitt des Trägers 106' mit einer Ausnehmung 112', in der der SMD-Temperatursensor 100 angeordnet ist. Auf den gegenüberliegenden Oberflächen des Trägerabschnitts 106' sind die leitfähigen Schichtabschnitte 116' bzw. 118' gebildet, die mit den Anschlussbereichen 102 bzw. 104 des SMD-Temperatursensors 100 in Kontakt sind.

Wie zu erkennen ist, ist die Abmessung des sich ergebenden Bauelements deutlich größer als die des ursprünglichen SMD-Temperatursensors 100, so dass dessen Handhabbarkeit deutlich verbessert ist. Ferner befindet sich auf den gegenüberliegenden Oberflächen des Trägerabschnitts 106' leitfähige Anschlussbereiche 116' und 118', die ebenfalls größer sind als die Anschlussbereiche 102 und 104 des SMD-Temperatursensors, so dass hier eine vergrößerte Anschlussfläche zur sicheren und zuverlässigen Kontaktierung des Bauteils 100 erreicht wird.

Ein Vorteil der vorliegenden Erfindung besteht darin, dass hier eine zuverlässigere Handhabung und Kontaktierung des SMD-Temperatursensors erreicht wird, ohne dass der Anteil von Material, der zur Herstellung des SMD-Temperatursensors erforderlich wäre, erhöht wird. Im Stand der Technik wäre der Ansatz zur Erhöhung der Handhabbarkeit und der Zuverlässigkeit beim Kontaktieren dadurch erreicht worden, dass in dem Wafer, in dem die SMD-Temperatursensoren hergestellt werden, diese mit einer geringeren Dichte hergestellt werden. In diesem Fall befindet sich um den eigentlichen Temperatursensorbereich noch zusätzliches Substratmaterial, welches für die eigentliche Funktionalität des Sensorelements nicht erforderlich wäre, jedoch aus Gründen dessen Handhabbarkeit und Kontaktierbarkeit belassen würde. Somit würde bei einem solchen Ansatz hochwertiges Substratmaterial, welches eigentlich ausschließlich zur Herstellung der SMD-Bauelemente erforderlich ist, "verschwendet", so dass die Kosten für ein solches Element unnötig hoch wären.

Diese Problematik wird erfindungsgemäß vermieden, da nun tatsächlich das teure Substratmaterial nur für diejenigen Elemente verwendet wird, für die es tatsächlich auch erforderlich ist, nämlich die Herstellung der SMD-Temperatursensoren. Um eine verbesserte Handhabbarkeit zu schaffen, lehrt die vorliegende Erfindung einen neuartigen Ansatz, nämlich die Verwendung eines Trägers aus einem einfachen und günstigen Trägermaterial, wie beispielsweise Keramik, in das die Löcher eingebracht sind, in die dann die SMD-Temperatursensoren eingebracht, kontaktiert und vereinzelt werden.

Die Löcher werden vorzugsweise in einer Art eingebracht, das die SMD-Temperatursensoren auf einfache Art und Weise eingebracht werden können und dort z.B. durch Reibung gehalten werden, so dass ein Herausfallen der eingebrachten Elemente vermieden wird.

Alternativ kann eine Hilfsschicht auf der Rückseite des Keramikträgers vorgesehen sein, die bis zur Prozessierung der Vorderseite beibehalten wird, so dass in diesem Fall die rückwärtigen Öffnungen der Ausnehmungen vorübergehend verschlossen werden, bis die SMD-Temperatursensoren nach der Kontaktierung derselben nach der Kontaktierung derselben durch die leitfähige Schicht in den Ausnehmungen gehalten sind.

Ferner ist die vorliegende Erfindung nicht darauf beschränkt, gleichzeitig eine Mehrzahl oder Vielzahl von Bauteilen in einem Träger anzuordnen. Die vorliegende Erfindung kann ebenfalls bei einzelnen Bauteilen angewandt werden, die in ein entsprechend dimensioniertes Trägerelement mit einer Ausnehmung eingebracht werden, wobei die durchzuführenden Verfahrensschritte denjenigen entsprechen, die oben anhand der Fig. 1 bis Fig. 4 beschrieben wurden.

Der Träger umfasst vorzugsweise ein nicht-leitfähiges Material, wie z.B. Glass, Epoxid, Polyimid, Keramik, ungebrantes Keramikmaterial (green sheet), etc. Alternativ kann der Träger ein leitfähiges Material aufweisen, wobei dann die Oberflächen des Trägers mit einem isolierenden Material beschichtet sind (z.B. Aluminium-Träger mit eloxierten Oberflächen.

Die Ausnehmungen können eine beliebige Form haben und durch eine geeignete mechanische Bearbeitung des Trägers, z.B. Fräsen, Stanzen, etc., oder durch eine chemische Bearbeitung des Trägers, z.B. Ätzen, eingebracht werden.

Die leitfähige Schicht wird beispielsweise durch Sputtern, Aufdampfen, Siebdruck, etc. aufgebracht und umfasst z.B. Platin, Gold, Silber, Nickel, etc. Alternativ kann die leitfähige Schicht durch einen leitfähigen Kleber gebildet sein.

## Patentansprüche

1. Verfahren zum Herstellen von Bauelementen mit folgenden Schritten:
Bereitstellen einer Mehrzahl von Bauteilen (100), die jeweils zumindest einen ersten Anschlussbereich (102) aufweisen;
Bereitstellen eines Trägers (106) mit einer ersten Oberfläche (108), in der eine Mehrzahl von Ausnehmungen (112₁ ... 112₄) gebildet ist;
Einbringen der bereitgestellten Bauteile (100) in die Ausnehmungen (112₁ ... 112₄), derart, dass der erste Anschlussbereich (102) jedes Bauteils (100) der ersten Oberfläche (108) des Trägers (100) zugewandt ist;
Aufbringen eines leitfähigen Materials (116) auf die erste Oberfläche (108) des Trägers (100), derart, dass das leitfähige Material (116) mit dem ersten Anschlussbereich (102) jedes Bauteils (100) in Kontakt ist; und
Vereinzeln der Bauelemente.

2. Verfahren nach Anspruch 1, bei dem
die Bauteile (100) einen ersten Anschlussbereich (102) und einen zweiten Anschlussbereich (104) aufweisen;
sich die Ausnehmungen (112₁ ... 112₄) in dem Träger (106) von der ersten Oberfläche (108) zu einer zweiten Oberfläche (110), die der ersten Oberfläche (108) gegenüberliegt, erstrecken; und
die Bauteile (100) derart in den Ausnehmungen (112₁ ... 112₄) eingebracht werden, dass der erste Anschlussbereich (102) der ersten Oberfläche (108) zugewandt ist, und der zweite Anschlussbereich (104) der zweiten Oberfläche (110) zugewandt ist;
wobei das Verfahren ferner folgenden Schritt aufweist:
Aufbringen eines leitfähigen Materials (118) auf die zweite Oberfläche (110) des Trägers (106), derart, dass das leitfähige Material (118) mit dem zweiten Anschlussbereich (104) jedes Bauteils (104) in Kontakt ist.

3. Verfahren nach Anspruch 1 oder 2, mit folgendem Schritt:
Einbrennen des leitfähigen Materials (116, 118).

4. Verfahren nach einem der Ansprüche 1 bis 3, das ferner folgenden Schritt aufweist:
Erzeugen der Mehrzahl von Bauelementen aus dem Träger (106) mit den darin angeordneten Bauteilen (100), derart, dass eine Abmessung jedes Bauelements größer ist als die des eingebrachten Bauteils (100), und ein Anschlussbereich (116', 118') des Bauelements größer ist als der Anschlussbereich (102, 104) des Bauteils (100).

5. Verfahren nach Anspruch 4, bei dem Vereinzeln des Trägers (106) ein Zerlegen des Trägers (106) oder ein Stanzen des Trägers (106) umfasst.

6. Verfahren nach einem der Ansprüche 1 bis 5, bei dem die Ausnehmung (112) in dem Träger (106) durch eine mechanische oder eine chemische Bearbeitung erzeugt wird.

7. Verfahren nach einem der Ansprüche 1 bis 6, bei dem der Träger (100) ein nicht-leitfähiges Material , das aus der Gruppe ausgewählt ist, die Glass, Keramik, ungebranntes Keramikmaterial, Epoxid oder Polyimid umfasst, oder ein leitfähiges Material mit einer nicht-leitfähigen Oberfläche umfasst.

8. Verfahren nach einem der Ansprüche 1 bis 7. bei dem das leitfähige Material (116, 118) Platin, Gold, Silber, Nickel oder einen leitfähigen Kleber umfasst.

9. Verfahren nach einem der Ansprüche 1 bis 8, bei dem das bereitgestellte Bauteil (100) einen Temperatursensor umfasst.

10. Bauelement, das gemäß einem Verfahren nach einem der Ansprüche 1 bis 9 hergestellt wurde, mit
einem Träger (106') mit einer ersten Oberfläche, in der eine Ausnehmung (112') angeordnet ist;
einem Bauteil (100) mit einem ersten Anschlussbereich (102), das in der Ausnehmung (112') derart angeordnet ist, dass der erste Anschlussbereich (102) der ersten Oberfläche zugewandt ist; und
einer leitfähigen Schicht (116') auf der ersten Oberfläche des Trägers (106'), die mit dem ersten Anschlussbereich (102) des Bauteils (100) in Kontakt ist.

11. Bauelement nach Anspruch 10, bei dem
das Bauteil (100) einen zweiten Anschlussbereich (104) aufweist;
sich die Ausnehmung (112') von der ersten Oberfläche des Trägers (106) zu einer zweiten Oberfläche des Trägers (106'), die der ersten Oberfläche gegenüberliegt, erstreckt; und
einer leitfähigen Schicht (118') auf der zweiten Oberfläche des Trägers (106'), die mit dem zweiten Anschlussbereich (104) des Bauteils (100) in Kontakt ist.

12. Bauelement nach Anspruch 11 oder 12, bei dem der Träger (106') ein nicht-leitfähiges Material , das aus der Gruppe ausgewählt ist, die Glass, Keramik, ungebranntes Keramikmaterial, Epoxid oder Polyimid umfasst, oder ein leitfähiges Material mit einer nicht-leitfähigen Oberfläche umfasst.

13. Bauelement nach einem der Ansprüche 10 bis 12, bei dem das leitfähige Material (116', 118') Platin, Gold, Silber, Nickel oder einen leitfähigen Kleber umfasst.

14. Bauelement nach einem der Ansprüche 10 bis 13, bei dem das Bauteil (100) einen Temperatursensor umfasst.

## Claims

1. Method for manufacturing devices, comprising:
providing a plurality of components (100) each having at least a first terminal region (102);
providing a support (106) having a first surface (108), in which a plurality of recesses (112₁ ... 112₄) are formed;
inserting the components 100 provided into the recesses (112₁ ... 112₄) such that the first terminal region (102) of each component (100) faces the first surface (108) of the support (100);
applying a conductive material (116) on the first surface (108) of the support (100) such that the conductive material (116) is in contact with the first terminal region (102) of each component (100); and
dicing the devices.

2. Method of claim 1, wherein
the components (100) have a first terminal region (102) and a second terminal region (104);
the recesses (112₁ ... 112₄) in the support (106) extend from the first surface (108) to a second surface (110) opposing the first surface (108); and
the components (100) are inserted in the recesses (112₁ ... 112₄) such that the first terminal region (102) faces the first surface (108) and the second terminal region (104) faces the second surface (110);
wherein the method further comprises:
applying a conductive material (118) on the second surface (110) of the support (106) such that the conductive material (118) is in contact with the second terminal region (104) of each component (100).

3. Method of claim 1 or 2, comprising:
burning-in the conductive material (116, 118).

4. Method of one of claims 1 to 3, further comprising:
generating the plurality of devices from the support (106) with the components (100) arranged therein, such that a dimension of each device is greater than that of the inserted component (100), and a terminal region (116', 118') of the device is greater than the terminal region (102, 104) of the component (100).

5. Method of claim 4, wherein dicing the support (106) includes splitting the support (106) or punching the support (106).

6. Method of one of claims 1 to 5, wherein the recess (112) in the support (106) is generated by mechanical or chemical treatment.

7. Method of one of claims 1 to 6, wherein the support (106) includes non-conductive material selected from the group including glass, ceramics, unburned ceramic material, epoxy, or polyimide, or including conductive material with a non-conductive surface.

8. Method of one of claims 1 to 7, wherein the conductive material (116, 118) includes platinum, gold, silver, nickel or conductive glue.

9. Method of one of claims 1 to 8, wherein the component (100) provided includes a temperature sensor.

10. Device manufactured according to a method of one of claims 1 to 9, comprising:
a support (106') having a first surface, in which a recess (112') is arranged;
a component (100) having a first terminal region (102), which is arranged in the recess (112'), such that the first terminal region (102) faces the first surface; and
a conductive layer (116') on the first surface of the support (106'), which is in contact with the first terminal region (102) of the component (100).

11. Device of claim 10, wherein
the component (100) has a second terminal region (104);
the recess (112') extends from the first surface of the support (106) to a second surface of the support (106') opposing the first surface; and
a conductive layer (118') on the second surface of the support (106'), which is in contact with the second terminal region (104) of the component (100).

12. Device of claim 11 or 12, wherein the support (106') includes non-conductive material selected from the group including glass, ceramics, unburned ceramic material, epoxy, or polyimide, or including conductive material with a non-conductive surface.

13. Device of one of claims 10 to 12, wherein the conductive material (116', 188') includes platinum, gold, silver, nickel or conductive glue.

14. Device of one of claims 10 to 13, wherein the component (100) includes a temperature sensor.

## Revendications

1. Procédé de fabrication de composants, aux étapes suivantes consistant à:
préparer une pluralité de composants (100) présentant, chacun, au moins une première zone de raccordement (102);
préparer un support (106) avec une première surface (108) dans laquelle sont formés une pluralité d'évidements (112₁ ... 112₄);
introduire les composants (100) préparés dans les évidements (112₁ ... 112₄), de sorte que la première zone de raccordement (102) de chaque composant (100) soit orientée vers la première surface (108) du support (100);
appliquer un matériau conducteur (116) sur la première surface (108) du support (100), de sorte que le matériau conducteur (116) se trouve en contact avec la première zone de raccordement (102) de chaque composant (100); et
séparer les composants.

2. Procédé selon la revendication 1, dans lequel
les composants (100) présentent une première zone de raccordement (102) et une deuxième zone de raccordement (104);
les évidements (112₁ ... 112₄) dans le support (106) s'étendent de la première surface (108) à une deuxième surface (110) située opposée à la première surface (108); et
les composants (100) sont introduits dans les évidements (112₁ ... 112₄) de sorte que la première zone de raccordement (102) soit orientée vers la première surface (108) et que la deuxième zone de raccordement (104) soit orientée vers la deuxième surface (110);
le procédé présentant par ailleurs l'étape suivante consistant à:
appliquer un matériau conducteur (118) sur la deuxième surface (110) du support (106), de sorte que le matériau conducteur (118) soit en contact avec la deuxième zone de raccordement (104) de chaque composant (104).

3. Procédé selon la revendication 1 ou 2, avec l'étape suivante consistant à:
cuire le matériau conducteur (116, 118).

4. Procédé selon l'une des revendications 1 à 3, présentant par ailleurs l'étape suivante consistant à:
générer la pluralité de composants à partir du support (106) avec les composants (100) y disposés, de sorte qu'une dimension de chaque composant soit plus grande que celle du composant (100) introduit, et qu'une zone de raccordement (116', 118') du composant soit plus grande que la zone de raccordement (102, 104) du composant (100).

5. Procédé selon la revendication 4, dans lequel la séparation du support (106) comprend une décomposition du support (106) ou un découpage du support (106).

6. Procédé selon l'une des revendications 1 à 5, dans lequel l'évidement (112) dans le support (106) est généré par un usinage mécanique ou chimique.

7. Procédé selon l'une des revendications 1 à 6, dans lequel le support (100) est un matériau non conducteur choisi parmi le groupe comprenant le verre, la céramique, un matériau céramique non cuit, l'époxyde ou le polyimide, ou un matériau conducteur avec une surface non conductrice.

8. Procédé selon l'une des revendications 1 à 7, dans lequel le matériau conducteur (116, 118) comprend du platine, de l'or, de l'argent, du nickel ou un adhésif conducteur.

9. Procédé selon l'une des revendications 1 à 8, dans lequel le composant préparé (100) comporte un capteur de température.

10. Composant produit selon un procédé selon l'une des revendications 1 à 9, avec un support (106') avec une première surface dans laquelle est disposé un évidement (112');
un composant (100) avec une première zone de raccordement (102) qui est disposée dans l'évidement (112') de sorte que la première zone de raccordement (102) soit orientée vers la première surface; et
une couche conductrice (116') sur la première surface du support (106') qui est en contact avec la première zone de raccordement (102) du composant (100).

11. Composant selon la revendication 10, dans lequel
le composant (100) présente une deuxième zone de raccordement (104);
l'évidement (112') s'étendant de la première surface du support (106) à une deuxième surface du support (106') opposée à la première surface; et
une couche conductrice (118') sur la deuxième surface du support (106') qui est en contact avec la deuxième zone de raccordement (104) du composant (100).

12. Composant selon la revendication 11 ou 12, dans lequel le support (106') est un matériau non conducteur choisi parmi le groupe comprenant le verre, la céramique, un matériau céramique non cuit, l'époxyde ou le polyimide, ou un matériau conducteur avec une surface non conductrice.

13. Composant selon l'une des revendications 10 à 12, dans lequel le matériau conducteur (116', 118') comprend du platine, de l'or, de l'argent, du nickel ou un adhésif conducteur.

14. Composant selon l'une des revendications 10 à 13, dans lequel le composant (100) comporte un capteur de température.
